# EUROPEAN PATENT APPLICATION

(11) **EP 4 603 403 A1**
(43) Date of publication of application: **20.08.2025**
(21) Application number: 25158154.2
(22) Date of filing: 16.02.2025
(51) Int. Cl.: B65B 69/00, B25J 9/16

(54) **AUTOMATED BOX OPENER SYSTEM AND METHOD**

(30) Priority: 16.02.2024 US 202463554634 P; 11.02.2025 US 202519050753
(71) Applicant: Design & Assembly Concepts, Inc., Leander, TX 78641 (US)
(72) Inventor: NEIL, Michael, Leander 78641 (US); GANNINGER, Mark, Leander 78641 (US)
(74) Representative: FRKelly

(57) **Abstract**

A system for opening a box can include transport equipment configured to displace the box into a cutting zone, and multiple cameras, a field of view of each of the cameras being directed toward the cutting zone. A method of opening a box can include displacing the box into a cutting zone of a box opener system, directing each of multiple cameras toward a respective side of the box, and fusing pointclouds output by the cameras. Another system for opening a box can include multiple cameras, a field of view of each of the cameras being directed toward a cutting zone, and a control system connected to the cameras. The control system operates a robot arm and a cutting tool manipulated by the robot arm.

## Description

### BACKGROUND

This disclosure relates generally to industrial automation and, in an example described below, more particularly provides systems and methods for automated box opening.

When it is desired to obtain access to items in a sealed container, such as a box, one option is to use a knife or razor to cut the container open. The container itself may be cut, and/or tape, etc., may be cut to open the container.

Use of a knife or razor by a worker to cut a container open raises safety concerns, as well as produces inconsistent or even damaging results (such as, damage to one or more items in the container). It will, therefore, be readily appreciated that improvements are continually needed in the art of designing, constructing and utilizing box opener systems. The present disclosure provides such improvements, which may be used in a wide variety of different industrial environments.

### BRIEF DESCRIPTION OF THE DRAWINGS

FIG. 1 is a representative elevational view of an example of an automated box opener system and associated method which can embody principles of this disclosure.
FIG. 2 is a representative top view of the FIG. 1 box opener system.
FIG. 3 is a representative schematic view of the box opener system.

### DETAILED DESCRIPTION

Representatively illustrated in the accompanying drawings is an automated box opener system and associated method which can embody principles of this disclosure. However, it should be clearly understood that the system and method are merely one example of an application of the principles of this disclosure in practice, and a wide variety of other examples are possible. Therefore, the scope of this disclosure is not limited at all to the details of the system and method as described herein and/or depicted in the drawings.

In industrial settings, efficient and accurate opening of boxes (such as, boxes constructed of cardboard) is a repetitive and time-consuming task. The present disclosure addresses the need for an automated solution that can adapt to varying box sizes, positions and conditions.

Software is included as part of an automated box opener system example. The software employs advanced algorithms and data processing techniques to calculate the dimensions and position of a cardboard (or other material) box, subsequently generating a precise three-dimensional (3D) cut path for a robot arm.

In one example, the software's primary function is to process data from multiple light-detection-and-ranging (LiDAR) cameras, each positioned to detect a different side of a box within a cutting zone. The software calculates the box's dimensions and position, creating a 3D cut path for a robot arm (such as, of the type marketed by Fanuc America Corporation of Rochester Hills, Michigan USA) to follow while opening the box.

The robot arm displaces a cutting tool along the cut path, whereby the cutting tool cuts the box. In an example described below, the cutting tool cuts the box along a perimeter of the box a predetermined distance below a top surface of the box.

Inputs to the software can include: 1) pointclouds (e.g., 38,000 points each) from four LiDAR cameras, comprising x, y, z data, 2) cutting parameters, including cut height, and 3) a trigger signal from the system's programmable logic controller (PLC) to initiate the dimensioning and positioning process.

Outputs from the software can include: 1) sixteen 3D positions (x, y, z) representing the cut path for the robot arm (more or less 3D positions may be used in other examples), 2) cutting parameters for the robot, and 3) calculated length, width, height dimensions for a human-machine interface (HMI).

In one example, the software can operate in several distinct phases: 1) Calibration Phase, 2) Pointcloud Filtering and Fusing, 3) Cut Path Calculation, and 4) Cut Line/Point Validation. The Calibration Phase can include 1) rough setting of camera extrinsics, 2) calculation of transformation matrices for pointcloud alignment, and 3) calculation of final extrinsics for a fused pointcloud. The Pointcloud Filtering and Fusing phase can include 1) transformation, cropping, and filtering of pointclouds from each camera, 2) merging and smoothing of pointclouds into a single fused pointcloud, and 3) final filtering and alignment of the fused pointcloud. The Cut Path Calculation phase can include 1) cropping and hull calculation of the final pointcloud, 2) generation of a contour representing the box's perimeter, and 3) calculation of 3D positions representing the cut path. The Cut Line/Point Validation phase can include validation of the generated points (3D positions) for cutting feasibility.

In one example, the software interfaces with a PLC using Ethernet/IP protocol for operational control and data exchange. It also utilizes a MySQL (TM) database for persistent setting storage and a Python (TM) application programming interface (API) for bidirectional data exchange with the system's HMI. The software operates without direct end-user interaction, receiving necessary data and operational triggers via the HMI and PLC.

The software is able to calculate cutting paths dynamically based on real-time box position and dimension detection. This allows for precise cutting on boxes that are damaged, malformed, or poorly positioned, adapting to variations in all three dimensions (x, y, z).

In one example, the software is developed using Python (TM) and C++ (TM), and the software leverages the Pointcloud Library (of C++ (TM)) and Open3D (TM) (of Python(TM)). The software operates within the ROS Noetic framework (distributed by Open Source Robotics Foundation, Inc.), enabling real-time data exchange across different processing steps and programming languages.

In one example, the software calculates the dimensions and position of a cardboard or other material box in the cutting zone of the system using the outputs of four LiDAR cameras. Other numbers of cameras may be used in other examples. The LiDAR cameras are arranged such that they each face a different side of the box in the cutting zone. The calculated dimensions and positions are then used to create a cut path in 3D space that is used by the robot arm to cut open the box.

The inputs to the software include the pointclouds, each comprising, for example, 38,000 points of x, y, z data representing points on an outer surface of the box. There are four of these input pointclouds in this example, one from each of the LiDAR cameras.

Other inputs to the software include the requested cutting parameters, of which the "Z-Shift" (height from top of the box to the cut line) is used as an input for calculation. Another input is a trigger signal from the PLC controlling the system that is used to tell the software that a box is securely in the cutting zone and to start the dimensioning and positioning process of the software. The outputs of the software include sixteen positions in 3D space (x, y, z) that represent a cut path that is provided to the robot arm (in this example), the cutting parameters that were passed in during the input phase are also provided to the robot arm, and the set of Length, Width, Height values that were calculated and that are provided to the HMI in the system.

The phases used in the operation of the software are described more fully below. However, it should be clearly understood that the specific details of the phases relate to a specific example and the scope of this disclosure is not limited to these specific details.

There are three steps to the Calibration phase. The first step is only performed once during an initial setup of the system. The other two steps only need to be performed during the initial setup of the system or if the LiDAR cameras are moved.

In the first Calibration phase step, extrinsics (position and orientation data) for each LiDAR camera are set. This extrinsic data is used to transform the pointcloud data from each camera to be near its final/actual location in 3D space. This step does not need high accuracy as it is only establishing a baseline. The final high accuracy extrinsics will be completed in the last step of the Calibration phase.

In the second step of the Calibration phase, the transformation matrices are calculated to align the pointclouds from each LiDAR camera with each other. This is achieved by placing a gauge block of a known size with one corner at the origin (x=0, y=0, z=0) of the cutting zone. The software will then create an artificial pointcloud that matches the gauge block at the "ideal" origin in 3D space. Once the artificial pointcloud is setup, then pointclouds are gathered from each LiDAR camera. The pointcloud from each camera is aligned to the artificial pointcloud using multiple passes of an iterative closest point algorithm until a tight fit is achieved between the artificial pointcloud and the LiDAR camera's pointcloud. Once all four LiDAR camera pointclouds are aligned with the artificial pointcloud, the transformation matrix for each camera is saved and new pointclouds from each LiDAR camera are gathered. Using the transformation matrices for each LiDAR camera, the respective pointcloud position is transformed and the alignment fit is verified against the artificial pointcloud to ensure a successful alignment calibration has been achieved. These alignment matrices are used to align the pointclouds obtained from the cameras in a fusing process to create a single fused pointcloud.

In a third step of the Calibration phase, the final extrinsics for the fused pointcloud are calculated. Using the single fused pointcloud that was created using the alignment calibration from the previous step, the robot arm equipped with a fiducial marker is displaced to several different known locations in the cut zone. Once the robot arm is in position, the fused pointcloud is obtained and the fiducial marker is identified, providing the x, y, z location of the marker. Once all of the location pointclouds are gathered, a delta (difference) between the fiducial marker position and the actual location is calculated for each location of the marker. Once the average delta is calculated, a final transformation matrix is created and saved. This final transformation matrix is used to align the fused pointcloud to its actual location in relation to the robot arm.

In the Pointcloud Filtering and Fusing phase, a single pointcloud is gathered from each LiDAR camera and transformed using the alignment transformation matrix from the second step of the Calibration phase. Each pointcloud is cropped to include only a region that represents the cutting zone of the system, and is then filtered to remove noise and outliers using, for example, a statistical outlier removal algorithm or a distance and neighbors outlier removal algorithm. Once each of the pointclouds have been gathered, transformed, and filtered, then all four pointclouds are merged together into a single fused pointcloud.

Once the single fused pointcloud is created, then a moving least squares (MLS) algorithm is used to smooth and clean the fused pointcloud, removing any artifacts caused by the merging of the four pointclouds. Once the moving least squares algorithm is complete, the pointcloud is once again filtered to remove any remaining noise or outliers, for example, with the previously used statistical or distance and neighbors outlier removal algorithm.

Once the final filtering operation is completed, the fused pointcloud is transformed using the final extrinsics that were calculated in the third step of the Calibration phase. The final filtered and transformed fused pointcloud is saved for use in the next phases.

The Cut Path Calculation phase includes calculation of the sixteen positions in 3D space that represent the cut path. Other numbers of cut path positions may be used in other examples.

Using the final pointcloud from the Pointcloud Filtering and Fusing phase, the pointcloud is cropped using the "Z-Shift" cutting parameter. This cropping will remove all of the points that are lower than the height of the box, minus the "Z-Shift" value, and minus an additional margin (such as, 20-30mm).

Using the cropped pointcloud, a concave hull is calculated. The points that represent the concave hull are then flattened by removing the z value for the points, which results in a contour that represents the outside perimeter of the box detection (e.g., extending about the sides of the box).

Using the flattened concave hull points, points are added so that there is no more than a maximum distance (e.g., 5mm Euclidean) between points along the contour/perimeter line. The filled contour/perimeter line of points is then split out into individual sides, and each side is saved to its own list. The list of each side is then filtered using a standard deviation filter to remove any remaining outliers. The remaining points along each side are used to calculate a polynomial that represents the side's respective x position given its y position, or the y position given its x position, depending on which side is being calculated.

Using the polynomial for each side, a new contour/perimeter line is created with a spacing between points that is no more than a maximum distance (e.g., 5mm Euclidean) from its nearest neighbor point. Using the cropped pointcloud, an axis aligned bounding box is created.

Using the top four points of the bounding box (for a rectangular box) a list of sixteen search points, which includes each corner and three additional points along each side, are setup. For each of these search points, a nearest neighbor k-d tree (multi-dimensional search tree) algorithm is used to find the closest corresponding point in the new contour/perimeter line points that was previously created. The x and y values for each of these found points is saved.

For each of the saved found points, using the highest z value from the axis aligned bounding box, a new search point is created. Using the new search point location, the point is offset by, for example, 20mm toward the center of the detection and a radius k-d tree search algorithm is then used from the offset location to gather the z values from all points in the cropped pointcloud within, for example, an 8mm radius circle from the offset location.

The gathered z values are averaged and the average z value is applied as the z value for the respective point found during the search of the new contour/perimeter line points. This new list of sixteen points with x, y and z values are saved for the next phase.

The Cut line/Point Validation phase includes performance of a validation, using the new list of sixteen points, to ensure that none of the points are outside the working area of the cutting zone, that the points result in a mostly square/rectangular cut line or perimeter, and that the points do not double back on themselves. Depending on the results of these validation checks, a determination is made if the detection is valid or invalid.

If the points are valid, the list of points and cutting parameters are provided to the robot arm to cut open the box. If the points are not valid, the PLC is notified, and the box is rejected out of the cutting zone without the robot arm attempting to cut the box open. In other examples, the Pointcloud Filtering and Fusing, Cut Path Calculation and Cut line/Point Validation phases may be attempted again if the points are not valid.

The software communicates with the PLC using the Ethernet/IP protocol in this example. The PLC also serves as an intermediate to send any data from the software to the robot arm. The software uses a MySQL (TM) database for persistent setting storage. The software communicates with a Python (TM) API that manages all the SQL data, as well as provides bi-directional data transfer with the HMI of the system. The API also provides any non-persistent settings data coming from the HMI to the software.

The software does not have direct end user interaction in this example, other than initial data input (such as, the "Z-shift" cutting parameter) prior to operation of the system. The software is provided with any necessary direct end user interaction data though the HMI and API. Any signals needed to start operations on the software are provided by the PLC.

The software allows accurate cutting of boxes without any pre-formatted pathing, since the pathing is calculated from the detection data. It is also capable of adjusting across all three axes (x, y, z) to allow for accurate cutting on damaged, malformed or poorly positioned boxes.

Thus, it will be appreciated that an automated box opener system and method, in which a position and dimensions of a box are determined using multiple LiDAR cameras, is disclosed herein. In described examples, each LiDAR camera outputs a pointcloud, and the pointclouds are fused together to produce a fused pointcloud.

A three dimensional cut path is generated using the fused pointcloud. A robot arm displaces a cutting tool along the cut path to thereby cut the box open.

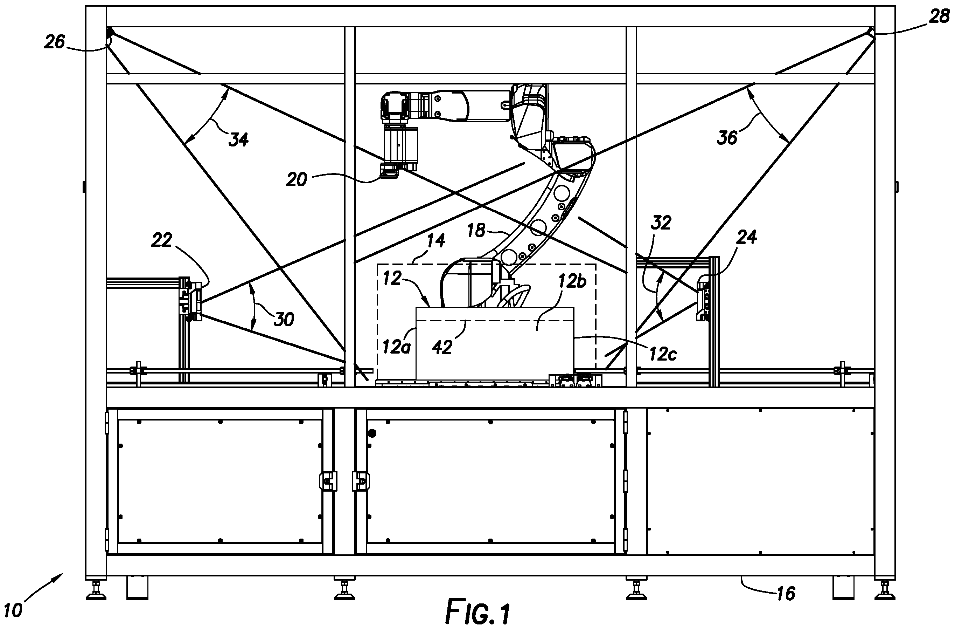

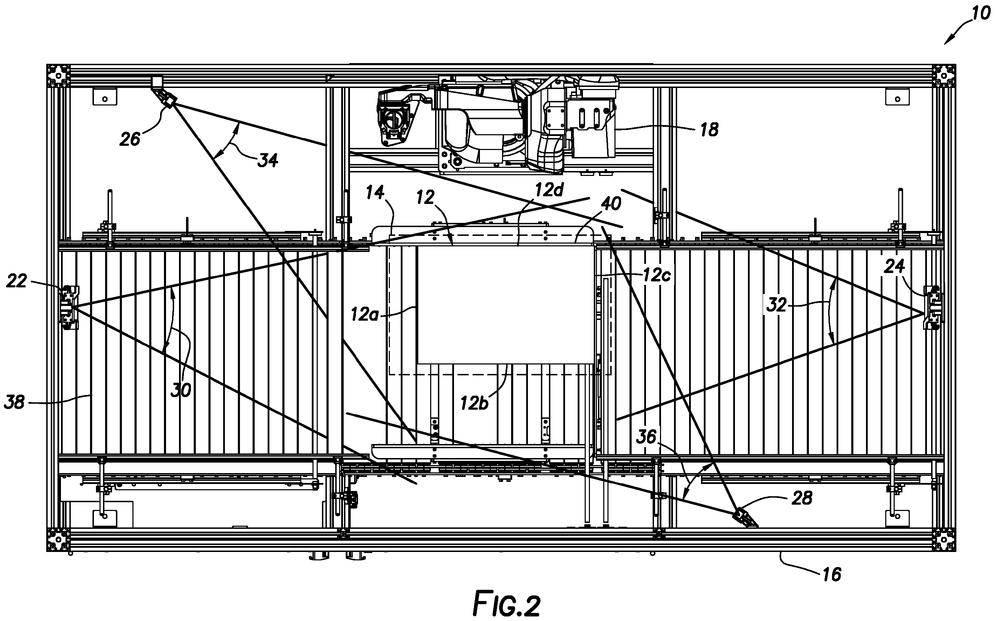

Referring specifically now to FIGS. 1 & 2, an example of the automated box opener system 10 is representatively illustrated. In this example, the system 10 is used to open a box 12 positioned in a cutting zone 14 defined in an enclosure 16.

A robot arm 18 is positioned in the enclosure 16. The robot arm 18 manipulates a cutting tool 20 used to cut through a material (such as, cardboard, polystyrene, etc.) of the box 12.

Four LiDAR cameras 22, 24, 26, 28 are positioned in the enclosure 16 and directed toward the cutting zone 14. The cutting zone 14 is within respective fields of view 30, 32, 34, 36 of the cameras 22, 24, 26, 28. Thus, when the box 12 is received in the cutting zone 14, sides 12a-d of the box are within the fields of view 30, 32, 34, 36 of the cameras 22, 24, 26, 28.

In this example, each of the cameras 22, 24, 26, 28 is positioned, so that its respective field of view 30, 32, 34, 36 encompasses at least one of the box sides 12a-d. Stated differently, each of the box sides 12a-d is within the field view 30, 32, 34, 36 of the respective camera 22, 24, 26, 28.

As depicted in FIGS. 1 & 2, the side 12a is in the field of view 30 of the camera 22, the side 12b is in the field of view 36 of the camera 28, the side 12c is in the field of view 32 of the camera 24, and the side 12d is in the field of view 34 of the camera 26. Each of the box sides 12a-d is in multiple fields of view 22, 24, 26, 28 in this example, but in other examples each of the box sides may be in only a single respective field of view.

In operation, a conveyor 38 and/or other transport equipment displaces the box 12 into the cutting zone 14 defined in the enclosure 16. The box 12 is accurately positioned in the cutting zone 14 (for example, using guides, clamps, or other positioning equipment 40).

With the box 12 secured in the cutting zone 14, the cameras 22, 24, 26, 28 and the software are used to obtain respective pointclouds representing the surfaces (e.g., spatial data representing the sides 12a-d) of the box 12, as described above. The pointclouds are fused and a cut path 42 is produced. The robot arm 18 displaces the cutting tool 20 along the cut path 42, so that the box 12 is opened.

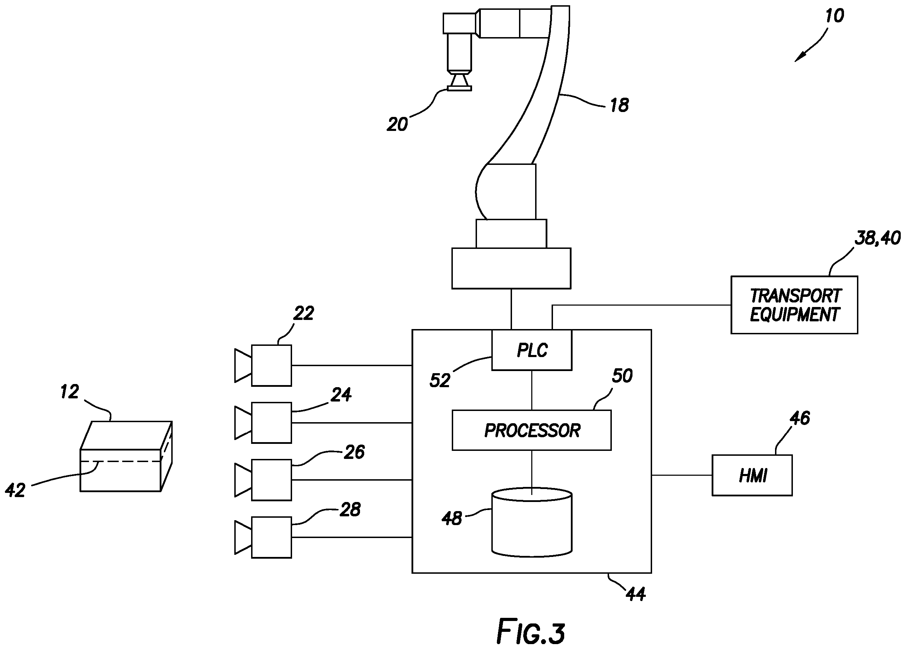

Referring additionally now to FIG. 3, a schematic view of the box opener system 10 is representatively illustrated. In this view it may be seen that the box opener system 10 includes a control system 44 connected to each of the robot arm 18, the cutting tool 20, the cameras 22, 24, 26, 28, and the transport equipment (including, for example, the conveyor 38 and the positioning equipment 40). A human machine interface (HMI) 46 provides for input and output of data (such as, the "Z-Shift" cutting parameter and other cutting parameters, the detected box dimensions, the cut path 42, etc.) via, for example, a display, printer, keyboard, mouse, joystick, data storage devices, etc.

The control system 44 in this example includes memory 48, at least one processor 50 and a programmable logic controller (PLC) 52. The memory 48 can include volatile and permanent memory, machine language instructions, data bases and the software described above. The pointclouds output from the cameras 22, 24, 26, 28 are initially stored in the memory 48. The processor 50 uses the stored pointclouds according to the instructions/software stored in the memory 48 to fuse the pointclouds and produce the cut path 42.

The PLC 52 operates the robot arm 18 and the cutting tool 20, so that the cutting tool is displaced along the cut path 42 and the box 12 is opened. The transport equipment 38, 40 is also operated by the PLC 52 to displace the box 12 into the enclosure 16, guide the box into the cutting zone 14, secure the box in the cutting zone, release the box after it is cut open, and displace the box out of the enclosure after it is cut open and released. The transport equipment 38, 40 can be provided with sensors (such as, proximity sensors, limit switches, infrared sensors, magnetic or electromagnetic sensors, acoustic sensors, etc.) for detecting when the box 12 has been received in the cutting zone 14, when the box has been secured in the cutting zone, when the box is displaced out of the cutting zone, etc.

It may now be fully appreciated that the above disclosure provides significant improvements to the art of designing, constructing and utilizing box opener systems. In examples described above, the box opener system 10 determines the dimensions of the sides 12a-d of the box 12, based on the spatial data output by the cameras 22, 24, 26, 28. A cut path 42 is produced for displacing a cutting tool 20 with a robot arm 18. Human interaction with the system 10 is minimal (limited in some examples to input of initial cutting parameters, such as, a "Z-shift").

A system 10 for opening a box 12 is provided to the art by the above disclosure. In one example, the system 10 can comprise: transport equipment 38, 40 configured to displace the box 12 into a cutting zone 14; and multiple cameras 22, 24, 26, 28, a field of view 30, 32, 34, 36 of each of the cameras 22, 24, 26, 28 being directed toward the cutting zone 14.

Each of the cameras 22, 24, 26, 28 may comprise a Light Detection And Ranging (LiDAR) camera configured to output a pointcloud comprising spatial data representing at least one side 12a-d of the box 12.

The cutting zone 14 may be defined in an enclosure 16 of the system 10. The transport equipment 38 may be configured to displace the box 12 into the enclosure 16. The cameras 22, 24, 26, 28 may be positioned in the enclosure 16.

The system 10 may include a control system 44 connected to the cameras 22, 24, 26, 28, the control system 44 being configured to operate a robot arm 18 and a cutting tool 20 manipulated by the robot arm 18. The control system 44 may include at least one programmable logic controller (PLC) 52 connected to the robot arm 18 and the transport equipment 38, 40.

The control system 44 may include software (e.g., stored in memory 48) configured to fuse pointclouds received from the respective cameras 22, 24, 26, 28. Each of the pointclouds may comprise spatial data representing at least one side 12a-d of the box 12.

A method of opening a box 12 is also provided to the art by the above disclosure. In one example, the method can comprise: displacing the box 12 into a cutting zone 14 of a box opener system 10; directing each of multiple cameras 22, 24, 26, 28 toward a respective side 12a-d of the box 12; and fusing pointclouds output by the cameras 22, 24, 26, 28.

The displacing step may comprise displacing the box 12 into an enclosure 16. The cutting zone 14 may be defined in the enclosure 16.

The method may include connecting the cameras 22, 24, 26, 28 to a control system 44, whereby the control system 44 controls operation of a robot arm 18 in part in response to the fused pointclouds.

The method may include the robot arm 18 displacing a cutting tool 20 along a cut path 42. The control system 44 may include software configured to fuse the pointclouds output by the cameras 22, 24, 26, 28. The software may be further configured to produce the cut path 42 at least in part based on the fused pointclouds.

A system 10 for opening a box 12 as described above can include multiple cameras 22, 24, 26, 28, a field of view 30, 32, 34, 36 of each of the cameras 22, 24, 26, 28 being directed toward a cutting zone 14; and a control system 44 connected to the cameras 22, 24, 26, 28, the control system 44 being configured to operate a robot arm 18 and a cutting tool 20 manipulated by the robot arm 18.

The cutting zone 14 may be defined in an enclosure 16 of the system 10. The cameras 22, 24, 26, 28 may be positioned in the enclosure 16.

The control system 44 may include at least one programmable logic controller (PLC) 52 connected to the robot arm 18. The control system 44 may include software configured to fuse pointclouds received from the respective cameras 22, 24, 26, 28, each of the pointclouds comprising spatial data representing at least one side 12a-d of the box 12.

Although various examples have been described above, with each example having certain features, it should be understood that it is not necessary for a particular feature of one example to be used exclusively with that example. Instead, any of the features described above and/or depicted in the drawings can be combined with any of the examples, in addition to or in substitution for any of the other features of those examples. One example's features are not mutually exclusive to another example's features. Instead, the scope of this disclosure encompasses any combination of any of the features.

Although each example described above includes a certain combination of features, it should be understood that it is not necessary for all features of an example to be used. Instead, any of the features described above can be used, without any other particular feature or features also being used.

It should be understood that the various embodiments described herein may be utilized in various orientations, such as inclined, inverted, horizontal, vertical, etc., and in various configurations, without departing from the principles of this disclosure. The embodiments are described merely as examples of useful applications of the principles of the disclosure, which is not limited to any specific details of these embodiments.

In the above description of the representative examples, directional terms (such as "above," "below," "upper," "lower," "upward," "downward," etc.) are used for convenience in referring to the accompanying drawings. However, it should be clearly understood that the scope of this disclosure is not limited to any particular directions described herein.

The terms "including," "includes," "comprising," "comprises," and similar terms are used in a non-limiting sense in this specification. For example, if a system, method, apparatus, device, etc., is described as "including" a certain feature or element, the system, method, apparatus, device, etc., can include that feature or element, and can also include other features or elements. Similarly, the term "comprises" is considered to mean "comprises, but is not limited to."

Of course, a person skilled in the art would, upon a careful consideration of the above description of representative embodiments of the disclosure, readily appreciate that many modifications, additions, substitutions, deletions, and other changes may be made to the specific embodiments, and such changes are contemplated by the principles of this disclosure. For example, structures disclosed as being separately formed can, in other examples, be integrally formed and *vice versa.* Accordingly, the foregoing detailed description is to be clearly understood as being given by way of illustration and example only, the spirit and scope of the invention being limited solely by the appended claims and their equivalents.

## Claims

1. A system for opening a box, the system comprising:
transport equipment configured to displace the box into a cutting zone; and
multiple cameras, a field of view of each of the cameras being directed toward the cutting zone.

2. The system of claim 1, in which each of the cameras comprises a Light Detection And Ranging (LiDAR) camera configured to output a pointcloud comprising spatial data representing at least one side of the box.

3. The system of claim 1, in which the cutting zone is defined in an enclosure of the system, and in which the transport equipment is configured to displace the box into the enclosure.

4. The system of claim 3, in which the cameras are positioned in the enclosure.

5. The system of claim 1, further comprising a control system connected to the cameras, the control system being configured to operate a robot arm and a cutting tool manipulated by the robot arm.

6. The system of claim 5, in which the control system includes at least one programmable logic controller (PLC) connected to the robot arm and the transport equipment.

7. The system of claim 5, in which the control system includes software configured to fuse pointclouds received from the respective cameras, each of the pointclouds comprising spatial data representing at least one side of the box.

8. A method of opening a box, the method comprising:
displacing the box into a cutting zone of a box opener system;
directing each of multiple cameras toward a respective side of the box; and
fusing pointclouds output by the cameras.

9. The method of claim 8, in which each of the pointclouds comprises spatial data representing at least one of the sides of the box.

10. The method of claim 8, in which each of the cameras comprises a Light Detection And Ranging (LiDAR) camera configured to output a respective one of the pointclouds.

11. The method of claim 8, in which the displacing comprises displacing the box into an enclosure, and in which the cutting zone is defined in the enclosure.

12. The method of claim 8, further comprising connecting the cameras to a control system, whereby the control system controls operation of a robot arm in part in response to the fused pointclouds.

13. The method of claim 12, further comprising the robot arm displacing a cutting tool along a cut path.

14. The method of claim 13, in which the control system comprises software configured to fuse the pointclouds output by the cameras.

15. The method of claim 14, in which the software is further configured to produce the cut path at least in part based on the fused pointclouds.

16. A system for opening a box, the system comprising:
multiple cameras, a field of view of each of the cameras being directed toward a cutting zone; and
a control system connected to the cameras, the control system being configured to operate a robot arm and a cutting tool manipulated by the robot arm.

17. The system of claim 16, in which each of the cameras comprises a Light Detection And Ranging (LiDAR) camera configured to output a pointcloud comprising spatial data representing at least one side of the box.

18. The system of claim 16, in which the cutting zone is defined in an enclosure of the system, and in which the cameras are positioned in the enclosure.

19. The system of claim 16, in which the control system includes at least one programmable logic controller (PLC) connected to the robot arm.

20. The system of claim 16, in which the control system includes software configured to fuse pointclouds received from the respective cameras, each of the pointclouds comprising spatial data representing at least one side of the box.
